# EUROPEAN PATENT SPECIFICATION

(11) **EP 2 081 103 B1**
(45) Date of publication and mention of the grant of the patent: **15.08.2012**
(21) Application number: 08150237.9
(22) Date of filing: 14.01.2008
(51) Int. Cl.: G06F 3/023, G06F 3/02, H01H 13/83, H01H 9/18

(54) **Handheld electronic device comprising a keypad having multiple character sets assigned thereto, with the character sets being individually illuminable**
Tragbare elektronische Vorrichtung mit einer Tastatur, der verschiedene individuelle Zeichensätze zugeordnet sind, wobei die Zeichensätze individuell beleuchtbar sind
Dispositif électronique portable comprenant un clavier doté de plusieurs jeux de caractères attribués, les jeux de caractères étant individuellement éclairables

(43) Date of publication of application: 22.07.2009
(73) Proprietor: Research In Motion Limited, Waterloo, ON N2L 3W8 (CA)
(72) Inventor: Wisebourt, Shaul, Waterloo, Ontario N2L 3W8 (CA); Robertson, Ian, Waterloo, Ontario N2L 3W8 (CA); Bajar, David, Waterloo, Ontario N2L 3W8 (CA); Fyke, Steven Henry, Waterloo, Ontario N2L 3W8 (CA)
(74) Representative: Roberts, Gwilym Vaughan

(56) References cited:
- EP-A- 1 768 012
- US-A- 5 408 060
- US-A1- 2004 109 312

## Description

### BACKGROUND

### Field

The disclosed and claimed concept relates generally to handheld electronic devices and, more particularly, to a handheld electronic device that comprises a keypad having multiple character sets assigned thereto, with the various character sets being individually illuminable.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

While handheld electronic devices have been generally effective for their intended purposes, such handheld electronic devices have not, however, been without limitation. The portable nature of handheld electronic devices can result in certain shortcomings that typically do not exist with, for example, desktop devices. For example, it might be desirable to have multiple character sets be available on an electronic device, such as would enable a user to type in two different language employing two different character sets. While a keypad of a handheld electronic device potentially could be configured to have two different alphabets imprinted thereon, whereby each key might have imprinted thereon one or more letters from each of a plurality of alphabets, such a configuration potentially could have limitations when applied to handheld electronic devices due to the small space available on each key for printing. In order to make the keypad usable, each character would need to be printed of sufficient size that it could be seen by the user without undue effort, but printing the letters in a relatively large font can introduce limitations due to the difficulty of distinguishing one letter from another on the confined space of a key and the confusion resulting therefrom. Additionally, characters in certain alphabets, such as the Cyrillic alphabet, can have appearances that are very similar to characters in other alphabets, such as the Latin alphabet, while having different phonetic content. This can create further confusion in the mind of a user. It thus would be desired to provide an improved handheld electronic device and/or method that overcome these and other shortcomings.

US-A-2004109312 discloses an input device including a first light source which radiates first light of a first colour and a second light source which radiates light of a second colour, and a cap with a first portion which displays the first light and a second portion which displays the second light. US-A-5408060 discloses a keyboard in which keys are provided with symbols or areas of colour which denote different modes in which the keys are operable.

The invention is set out in the claims.

A full understanding of the disclosed and claimed concept can be gained from the following Description when read in conjunction with the accompanying drawings in which:

Fig. 1 is a front elevational view of an improved handheld electronic device in accordance with the disclosed and claimed concept;

Fig. 2 is a schematic depiction of the handheld electronic device of Fig. 1;

Fig. 3 is a first operational view of the handheld electronic device of Fig. 1 with a first character set being illuminated;

Fig. 4 is a second operational view of the handheld electronic device of Fig. 1 with a second character set being illuminated;

Fig. 5 is a front elevational view of the handheld electronic device of Fig. 1 partially cut away and depicting an exemplary embodiment of an illumination system thereof;

Fig. 6 is a view similar to Fig. 5, except depicting an alternate illumination system which is useful for understanding the claimed invention;

Fig. 7 is a view similar to Fig. 5, except depicting an example of an alternate illumination system which is useful for understanding the claimed invention;

Fig. 8 is an enlarged view of a key of Fig. 3

Fig. 9 is an enlarged view of a key of Fig. 4;

Fig. 10 is a flowchart depicting certain aspects of a method in accordance with the disclosed and claimed concept that can be performed on the handheld electronic device of Fig. 1;

Fig. 11 is an exemplary home screen that can be visually output on the handheld electronic device of Fig. 1;

Fig. 12 depicts an exemplary menu that can be output on a handheld electronic device;

Fig. 13 depicts another exemplary menu;

Fig. 14 depicts an exemplary reduced menu;

Fig. 15 is an output such as could occur during another exemplary text entry or text editing operation;

Fig. 16 is an output during another exemplary text entry operation;

Fig. 17 is an alternative output during the exemplary text entry operation of Fig. 16;

Fig. 18 is another output during another part of the exemplary text entry operation of Fig. 16; and

Fig. 19 is an exemplary output during a data entry operation.

Similar numerals refer to similar parts throughout the specification.

### DESCRIPTION

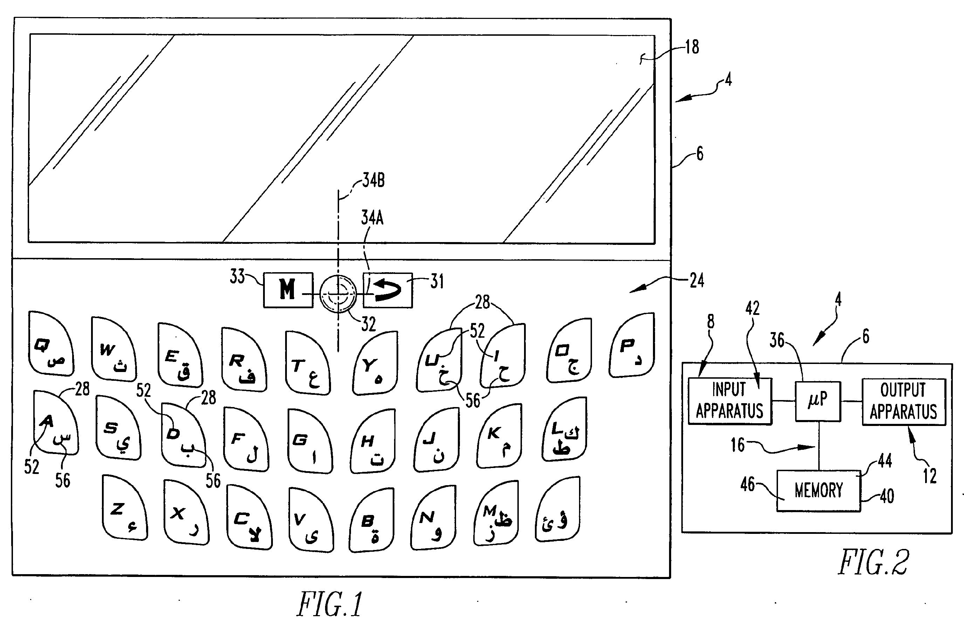

An improved handheld electronic device 4 is indicated generally in Fig. 1 and is depicted schematically in Fig. 2. The exemplary handheld electronic device 4 includes a housing 6 upon which are disposed an input apparatus 8, an output apparatus 12, and a processor apparatus 16. The input apparatus 8 is structured to provide input to the processor apparatus 16, and the output apparatus 12 is structured to receive output signals from the processor apparatus 16. The output apparatus 12 comprises a display 18 that is structured to provide visual output, although other output devices such as speakers, LEDs, tactile output devices, and so forth can be additionally or alternatively used.

As can be seen in Fig. 2, the processor apparatus 16 comprises a processor 36 and a memory 40. The processor 36 may be, for instance and without limitation, a microprocessor (µP) that is responsive to inputs from the input apparatus 8 and that provides output signals to the output apparatus 12. The processor 36 interfaces with the memory 40.

The memory 40 can be said to constitute a machine-readable medium and can be any one or more of a variety of types of internal and/or external storage media such as, without limitation, RAM, ROM, EPROM(s), EEPROM(s), FLASH, and the like that provide a storage register for data storage such as in the fashion of an internal storage area of a computer, and can be volatile memory or nonvolatile memory. The memory 40 has stored therein a number of routines 44 which are executable on the processor 36. As employed herein, the expression "a number of" and variations thereof shall refer broadly to any non-zero quantity, including a quantity of one. The routines 44 can be in any of a variety of forms such as, without limitation, software, firmware, and the like. The memory 40 also has stored therein a character data set 46 that comprises a plurality of character lookup tables, as will be set forth in greater detail below.

As can be understood from Fig. 1, the input apparatus 8 includes a keypad 24 and a multiple-axis input device which, in the exemplary embodiment depicted herein, is a track ball 32 that will be described in greater detail below. The keypad 24 comprises a plurality of keys 28, with the keys 28 and the track ball 32 all serving as input members that are actuatable to provide input to the processor apparatus 16. The keypad 24 and the track ball 32 are advantageously disposed adjacent one another on a front face of the housing 6. This enables a user to operate the track ball 32 substantially without moving the user's hands away from the keypad 24 during a text entry operation or other operation. The keypad 24 in combination with an illumination system such as set forth below can be said to comprise a keypad apparatus 42.

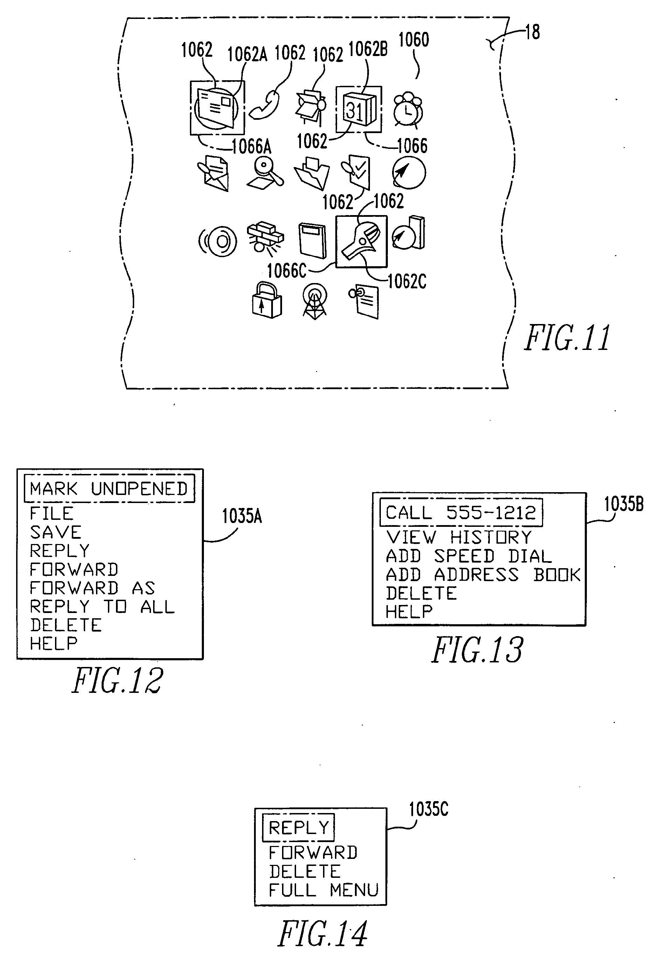

One of the keys 28 is an <ESCAPE> key 31 which, when actuated, provides to the processor apparatus 16 an input that undoes the action which resulted from the immediately preceding input and/or moves the user to a logically higher position within a logical menu tree managed by a graphical user interface (GUI) routine 44. The function provided by the <ESCAPE> key 31 can be used at any logical location within any portion of the logical menu tree except, perhaps, at a home screen such as is depicted in Fig. 11. The <ESCAPE> key 31 is advantageously disposed adjacent the track ball 32 thereby enabling, for example, an unintended or incorrect input from the track ball 32 to be quickly undone, i.e., reversed, by an actuation of the adjacent <ESCAPE> key 31.

Another of the keys 28 is a <MENU> key 33 which, when actuated, provides to the processor apparatus 16 an input that causes the GUI 44 to generate and output on the display 18 a menu such as is depicted in Fig 12. Such a menu is appropriate to the user's current logical location within the logical menu tree, as will be described in greater detail below.

While in the depicted exemplary embodiment the multiple-axis input device is the track ball 32, it is noted that multiple-axis input devices other than the track ball 32 can be employed without departing from the present concept. For instance, other appropriate multiple-axis input devices could include mechanical devices such as joysticks and the like and/or non-mechanical devices such as touch pads, track pads and the like and/or other devices which detect motion or input in other fashions, such as through the use of optical sensors or piezoelectric crystals.

The track ball 32 is freely rotatable in all directions with respect to the housing 6. A rotation of the track ball 32 a predetermined rotational distance with respect to the housing 6 provides an input to the processor apparatus 16, and such inputs can be employed by the routines 44, for example, as navigational inputs, scrolling inputs, selection inputs, and other inputs.

For instance, and as can be seen in Fig. 1, the track ball 32 is rotatable about a horizontal axis 34A to provide vertical scrolling, navigational, selection, or other inputs. Similarly, the track ball 32 is rotatable about a vertical axis 34B to provide horizontal scrolling, navigational, selection, or other inputs. Since the track ball 32 is freely rotatable with respect to the housing 6, the track ball 32 is additionally rotatable about any other axis (not expressly depicted herein) that lies within the plane of the page of Fig. 1 or that extends out of the plane of the page of Fig. 1.

The track ball 32 can be said to be a multiple-axis input device because it provides scrolling, navigational, selection, and other inputs in a plurality of directions or with respect to a plurality of axes, such as providing inputs in both the vertical and the horizontal directions. It is reiterated that the track ball 32 is merely one of many multiple-axis input devices that could be employed on the handheld electronic device 4. As such, mechanical alternatives to the track ball 32, such as a joystick, might have a limited rotation with respect to the housing 6, and non-mechanical alternatives might be immovable with respect to the housing 6, yet all are capable of providing input in a plurality of directions and/or along a plurality of axes.

The track ball 32 additionally is translatable toward the housing 6, i.e., into the plane of the page of Fig. 1, to provide additional inputs. The track ball 32 could be translated in such a fashion by, for example, a user applying an actuating force to the track ball 32 in a direction toward the housing 6, such as by pressing on the track ball 32. The inputs that are provided to the processor apparatus 16 as a result of a translation of the track ball 32 in the indicated fashion can be employed by the routines 44, for example, as selection inputs, delimiter inputs, or other inputs.

As can be seen in Fig. 1, many of the keys 28 each have assigned thereto a plurality of characters in different alphabets. Specifically, many of the keys 28 have assigned thereto both a first character 52 in the exemplary form of a Latin letter and a second character 56 in the exemplary form of an Arabic letter. More particularly, such keys 28 each have an illuminable first indicator which, when illuminated, depicts the first character 52 as being disposed on a key 28 and therefore indicates that the first character 52 is active on the key 28. Such keys 28 each further have an illuminable second indicator which, when illuminated, depicts the second character 56 as being disposed on the key 28 and therefore indicates that the second character 56 is active on the key 28. Such illuminable first and second indicators typically will be alternatively illuminable, meaning that typically either the first indicators or the second indicators, but not both, will be illuminated on the keys 28 of the keypad 24 at any given time, as will be set forth in greater detail below, although such alternate illumination is not necessarily a requirement.

The specific two alphabets depicted herein are not intended to be limiting. For instance the handheld electronic device may have two, three, or more different alphabets available thereon, and the alphabets may include any combination of the alphabets depicted herein and/or other alphabets such as Cyrillic, Armenian, Georgian, Abjads based alphabets such as Hebrew and the aforementioned Arabic, Abugidas based alphabets such as North Indic, South Indic, Ethiopic, and Thaana, Logographic & Syllabic alphabets, Korean and Asian based alphabets, and/or other alphabets such as other Latin-based alphabets, by way of example.

While Fig. 1 simultaneously depicts the first and second characters 52 and 56 on the keys 28, it is noted that such a situation typically will not occur during ordinary use of the handheld electronic device 4. Rather, and in accordance with the disclosed and claimed concept, typically only one character set or the other, i.e., either the Latin character set or the Arabic character set, will be illuminated at any one time. This enables a user entering, for instance, Arabic text, to see only the second characters 56 as being visible and available thereon.

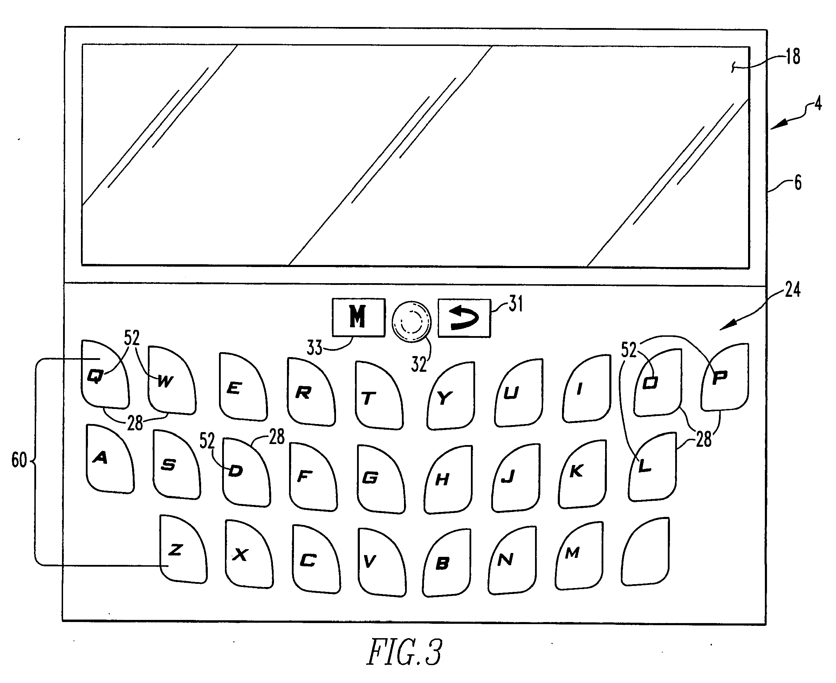

For example, Fig. 3 depicts the handheld electronic device 4 is in a first configuration wherein only the first characters 52 are visible and/or illuminated on the keys 28. The first characters 52 together form a first character set 60, i.e., a set of Latin letters. In the first configuration of the handheld electronic device 4 of Fig. 3, the second characters 56 are generally not visible on the keypad 24. Such selective illumination of a particular character set can be accomplished in any of a variety of ways, examples of which are set forth below.

When the handheld electronic device 4 is in the aforementioned first configuration, such as is depicted generally in Fig. 3, the first character set 60 is illuminated or otherwise visible on the keypad 24, and a character lookup table that is particular to the first character set 60 and that is a part of the character dataset 46 will be active on the processor apparatus 16. A character lookup table includes the identities of the various keys 28 of the keypad 24 as well as the characters that are assigned thereto and that are active at any given time. For instance, in the first configuration wherein the first character set 60, i.e., the set of Latin letters, is illuminated on the keypad 24 and is active on the handheld electronic device 4, an actuation of a given key 28 will cause the processor apparatus 16 to consult the Latin character lookup table to determine which Latin letter is assigned to that particular key 28.

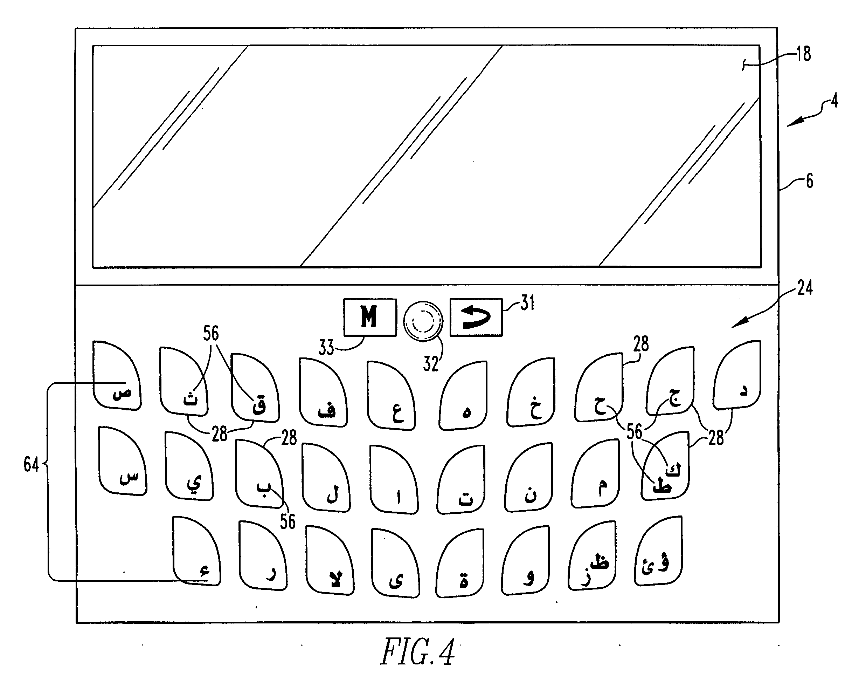

A second configuration of the handheld electronic device 4 is indicated generally in Fig. 4. The second characters 56 together form a second character set 64. In the second configuration, the second character set 64, i.e., the set of Arabic letters, is illuminated or is otherwise visible on the keypad 24 and is active on the handheld electronic device 4. In the second configuration the first character set 60, i.e., the set of Latin letters, is generally not visible. In the second configuration of Fig. 4, therefore, a character lookup table that is particular to the Arabic letters will be consulted with each keystroke to determine which character or characters are assigned to the actuated key.

While in Fig. 3 it is noted that each of the keys 24 is depicted as having at most a single first character 52 assigned thereto, it is understood that such an exemplary embodiment is not intended to be limiting. For instance, the keypad 24 could alternatively be configured in the form of a reduced keypad having, say, five columns of keys 28 wherein each of the keys 28 might have two or more different Latin letters assigned thereto and would be operable in conjunction with a disambiguation routine 44. In the first configuration of such an alternate embodiment, a particular key might have assigned thereto and have illuminated thereon the Latin letters "A" and "S", while other keys might have other Latin letters assigned thereto. An actuation of a key to which "A" and "S" are assigned would result in an ambiguous input that would be resolved by the disambiguation routine 44. Other variations will be apparent.

It is noted that the first and second characters 52 and 56 are depicted in Figs. 3 and 4 as being in an illuminated condition, although it is noted that the first or second characters 52 or 65 may additionally be at least somewhat visible to the naked eye without illumination. That is, the first and second characters 52 and 56 are depicted in Figs. 3 and 4 as being visible due to the application of electromagnetic energy to the keys 28 to selectively illuminate the first characters 52 or the second characters 56, but in the exemplary embodiment depicted herein the first characters 52 may be at least somewhat visible to the naked eye at any given time without illumination. It is noted, however, that any such character that is at least somewhat visible in the absence of illumination will be much more visible to the user when illuminated. As such, various systems are presented herein for selectively providing electromagnetic energy to the first character set 60 or the second character set 64 to selectively illuminate and make visible and/or to enhance the visibility of either the first character set 60 or the second character set 64.

In this regard, it is noted that in some circumstances, visible light can be used to provide illumination for certain of the characters. This can be accomplish, for instance, in a reverse-lighting situation wherein a key might be opaque except for a translucent region in the shape of a character. Visible light that is applied to the underside of such a key would be blocked from transmission to the user's eyes by the opaque portion, but the translucent portion in the shape of a character would allow the light to pass, thus illuminating the given character on the key. In such a situation, the translucent portion of the key 28 would be an illuminable indicator thereof.

In some situations, some of the characters could be formed from certain coatings that might be invisible to the naked eye in the presence of light in the visible spectrum but could become excited, i.e., fluoresce or otherwise generate light, when another type of electromagnetic energy such as ultraviolet energy is applied thereto. In such a situation, the coatings might be used to paint certain of the characters on the keys 28, with the characters then becoming illuminated or otherwise visible due to fluorescence or other excitement upon to the application of electromagnetic energy of a predetermined wavelength. The coatings in the shapes of characters would serve as illuminable indicators on the keys 28 on which the coatings are disposed. It is also noted that in certain circumstances such a coating used for one alphabet could be configured such that the characters of the one alphabet are visible in sunlight or in other visible light, such as when the coating is in the form of a conventional paint or ink.

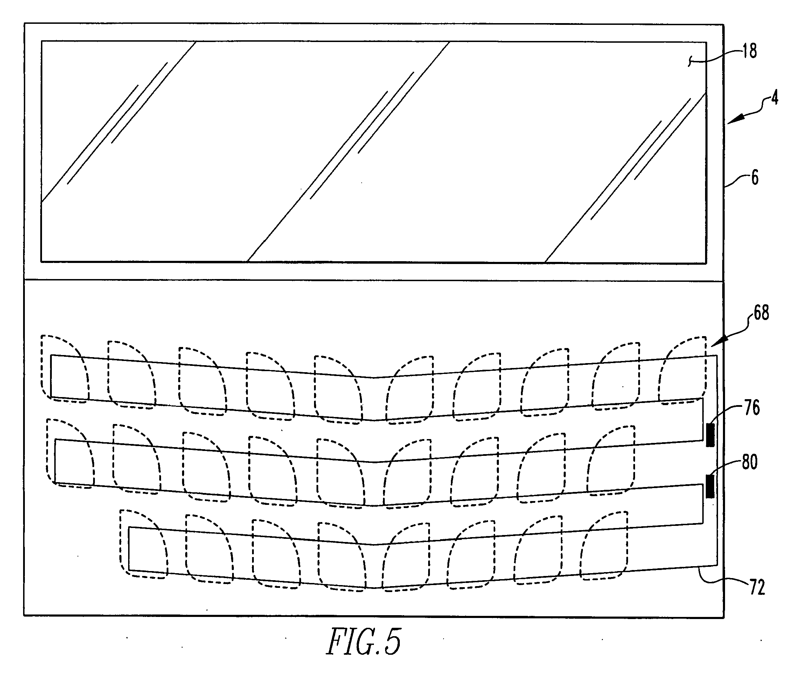

An exemplary embodiment of an illumination system 68 of the handheld electronic device 4 is shown generally in Fig. 5 which depicts the illumination system 68 within an interior region of the handheld electronic device 4 from which the front cover and the keypad 24 have been removed. It can be seen that the illumination system 68 comprises a light pipe 72, a first illumination source 76 in light communication with the light pipe 72, and a second illumination source 80 in light communication with the light pipe 72. The light pipe 72 is generally in the form of a transparent plastic member that transmits therethrough electromagnetic energy such as visible light and the like. As employed herein, the expression "light" and variations thereof is not intended to be limited to electromagnetic energy within the spectrum visible to the eyes of a human being, but rather is intended to further comprise electromagnetic energy that can lie outside the visible spectrum, such as would include ultraviolet light, infrared light, and the like without limitation. The first illumination source 76 generates, for instance, visible light, while the second illumination source 80 generates, for instance, ultraviolet light. While the first and second illumination sources 76 and 80 are indicated as being single objects disposed at one of the light pipe 72, it is understood that each illumination source might actually include a plurality of light sources distributed throughout the light pipe 72 to provide sufficient light intensity.

The first and second illumination sources 76 and 80 typically would operate on an exclusive basis, i.e., at any given time either the first illumination source 76 or the second illumination source 80 would be energized, although in certain situations it potentially might be appropriate to energize both the first and second illumination sources 76 and 80 simultaneously. The illumination system 68 would be appropriate when, for instance, the first character set is printed in black ink or is implemented in the reverse-lighting fashion mentioned above, with the second character set 64 being printed in an invisible coating that fluoresces or otherwise generates visible light when subjected to the ultraviolet radiation, for instance, that can be generated by the second illumination source 80.

When the first illumination source 76 is energized, thereby generating visible light, the first character set 60 would be illuminated to provide a high degree of visibility to the first character set 60. In such a situation, the Latin character lookup table would be active on the processor apparatus 16. However, in the second configuration the first illumination source 76 would be de-energized, and rather the second illumination source 80 would be energized. As such, the second character set 64 would become illuminated due to its fluorescence in the presence of ultraviolet light. While in such in the second configuration the first character set 60 potentially could remain at least somewhat visible, it would be non-illuminated and thus of much less visual interest and attention than the illuminated second character set 64. In the second configuration, the Arabic character lookup table would be active on the processor apparatus 16. It thus can be seen that by selectively energizing either of the illumination sources 76 and 80, either of the character sets 60 and 64 can be illuminated and thereby brought to the visual attention of the user.

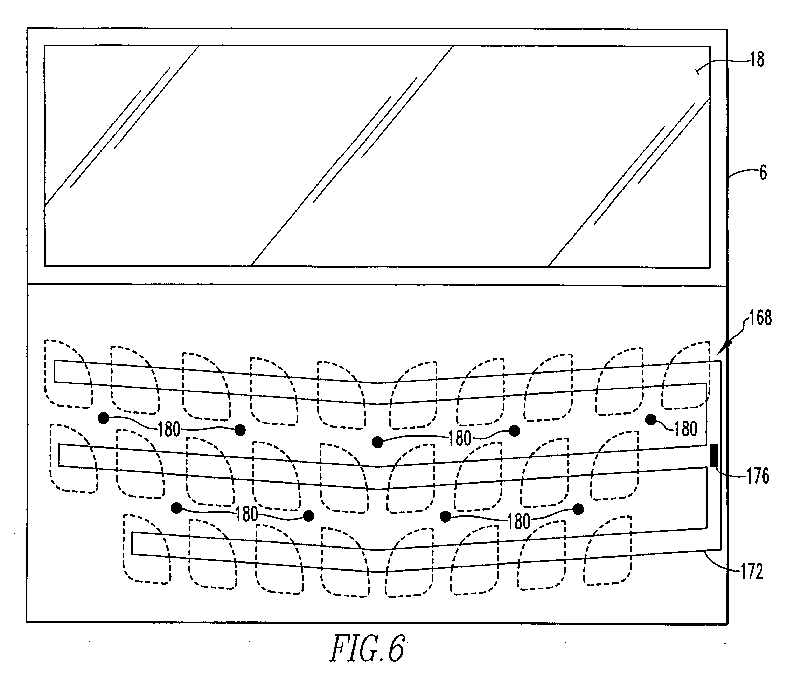

An alternate illumination system 168 which is useful for understanding the claimed invention is depicted generally in Fig. 6. The illumination system 168 comprises a light pipe 172 and a first illumination source 176 in light communication with the light pipes 172. The illumination system 168 additionally includes a plurality of second illumination sources 180 that are dispersed about the keys 28 in order to provide general illumination when energized. In such a situation, the first illumination source 176 would generate visible light, and the second illumination sources 180 would generate, for instance, infrared light from infrared LEDs. When the first illumination source 176 is energized, it transmits its electromagnetic energy, visible light in this example, through the light pipe 172, after which the visible light would be dispersed out of the keys 28 to illuminate the first character set 60. However, when the second illumination sources 180 are energized, the first illumination source 176 is de-energized, and the general illumination provided by the second illumination sources 180 shines directly on and illuminates the second character set 64. It is noted that the edges of the light pipe 172 can transmit a portion of the infrared energy from the second illumination sources 180 to the second character set 64 in order to further cause the second character set 64 to fluoresce or otherwise become excited.

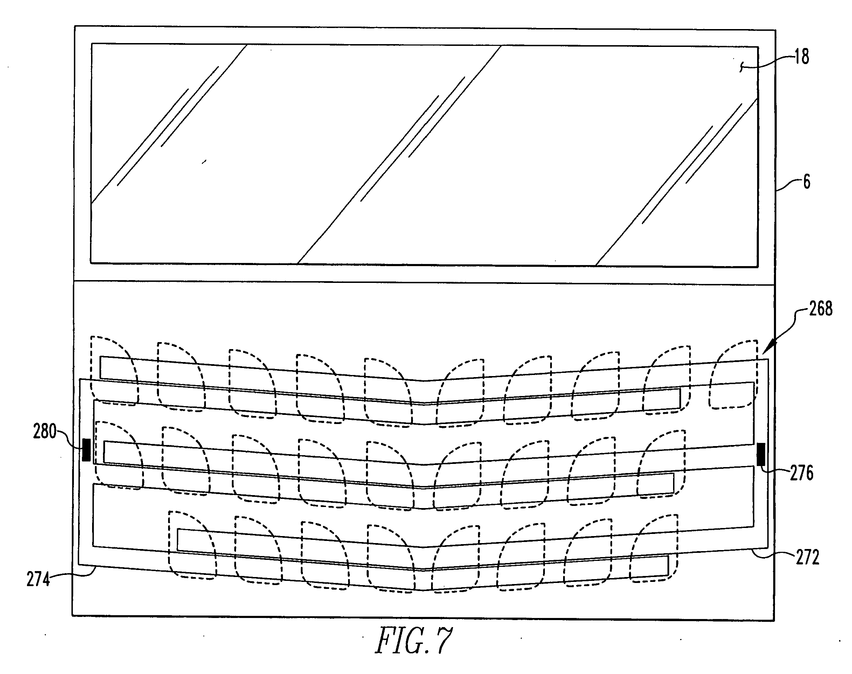

An example of an alternative illumination system 268 which is useful for understanding the claimed invention is depicted generally in Fig. 7. The illumination system 268 comprises a first light pipe 272 and a first illumination source 276 that is in light communication with the first light pipe 272. The illumination system 268 additionally comprises a second light pipe 274 that is separate from the first light pipe 272, and further comprises a second illumination source 280 in light communication with the second light pipe 274.

The first and second illumination sources 276 and 280 could be any type of electromagnetic energy source, for example, that is suited to illuminate the first character set 60 or the second character set 64, respectively. Advantageously, the separation of the first and second light pipes 272 and 274 enables further variations in the ways in which the characters can be formed on keys 28 because it resists any illumination source from illuminating more than one character set. That is, the first light pipe 272 is limited to illuminating the first character set 60, and the second light pipe 274 is limited to illuminating the second character set 64.

The first and second illumination sources 276 and 280 therefore could each generate visible light, with the first and second character sets 60 and 64 being printed with a visible ink or being generated using the reverse-illumination system mentioned above. In such a situation, both the first and second character sets 60 and 64 would be at least somewhat visible on the keypad 24 in the presence of sunlight, but when either the first or second illumination source 276 or 280 is energized, its respective character set would thereby be illuminated and would have much greater visual prominence to the user than the non-illuminated character set. Either or both of first and second illumination sources 276 and 280 could alternatively be ultraviolet or infrared energy sources, for example, or another type of energy source.

It thus be seen that a variety of illumination systems can selectively illuminate one character set or another whenever that character set is active on the handheld electronic device 4. Such selective illumination of one character set or the other makes the illuminated character set much more visible to the user than the other, non-illuminated, character set, with the result that the non-illuminated character set is at most minimally visually distracting when seen in conjunction with an illuminated character set. This makes the handheld electronic device 4 advantageously easy to use because visual clutter of character sets on the keys 28 is avoided by selectively making one character set or the other more visually prominent by selective illumination.

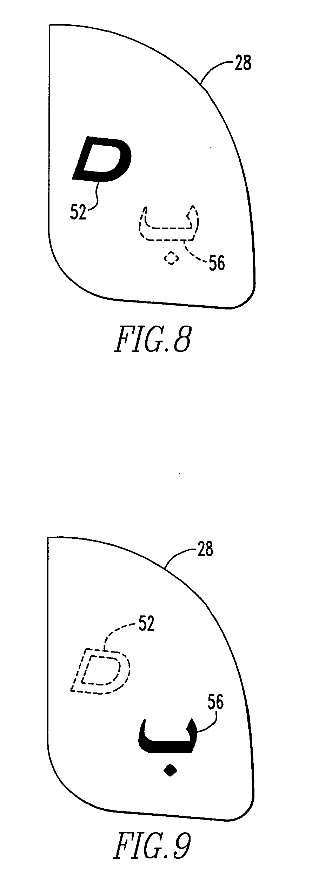

Figs. 8 and 9 further illustrate the selective illumination of the characters of the keys 28. In the first configuration of Fig. 8, it can be seen that the first character 52, i.e., the Latin letter "D", is visible and is illuminated. Also in Fig. 8, a second character 56 can be seen in phantom lines, indicating an absence of illumination. In the present example the second character 56 is in the form of an ink or coating that is invisible in the presence of the electromagnetic energy used to illuminate the first Latin character 52 "D". In the second configuration of Fig. 9, the second character 56 is illuminated whereas the first Latin character 52 "D" is indicated in phantom lines to depict an absence of illumination. While in the exemplary embodiment depicted herein the first character 52 is in the form of an ink or a reverse-illumination arrangement that is at least minimally visible even in the presence of the electromagnetic energy used to illuminate the second character 56, it is noted that the illuminated second character 56 has a much greater degree of visibility than the non-illuminated first character 52. Advantageously, therefore, the selective illumination of characters on the keys 28 avoids visual clutter and focuses the attention of the user on the character set that is active at any given on the handheld electronic device 4.

The first and second configurations of the handheld electronic device can be selected manually or can be selected automatically. Manually, a user could select between the first configuration, such as is depicted generally in Fig. 3, and the second configuration, such as is depicted generally in Fig. 4. This would result in one of the first and second illumination sources 76 and 80 being energized, one of the first and second character sets 60 and 64 being illuminated, and the corresponding character lookup table being made active on the processor apparatus 16. Since only one of the first and second character sets 60 and 64 is generally active on the handheld electronic device 4 at any one time, such a selection would also result the other of the first and second illumination sources 76 and 80 being de-energized, the other of the first and second character sets 60 and 64 becoming non-illuminated and thus either invisible or less visible than the illuminated character set, and the corresponding character lookup table being deactivated on the processor apparatus 16.

However, selection between the first and second configurations can be performed automatically in certain circumstances. For instance, in replying to a preexisting message, a configuration that is most appropriate to the preexisting text can be automatically selected. By way of example, if the user is replying to a message that was originally written using the Arabic alphabet, the second configuration can automatically be selected. Alternatively, if the user is sending a new message to a particular recipient, and if the immediately preceding message that was sent to the particular recipient was sent, for instance, employing the Arabic alphabet, the second configuration can be automatically selected. Other examples will be apparent.

Additionally or alternatively, the handheld electronic device 4 may be configured such that in a default situation it employs a default alphabet, i.e., the first configuration in the present example, but that in an alternate situation it automatically employs an alternate alphabet, i.e., the second configuration in the present example. For instance, the handheld electronic device 4 might employ the first alphabet as a default alphabet. However, when certain preexisting criteria are met, the handheld electronic device 4 would automatically begin to employ the second alphabet as an alternate alphabet. Once the preexisting criteria cease to be met, the handheld electronic device 4 could automatically return to employing the first alphabet or could prompt the user to manually switch back to the first alphabet.

For instance, one preexisting criterion might be the presence of the handheld electronic device 4 in a foreign locale, i.e., a country other than the user's home country. Another preexisting criterion might be that the prevalent language in the foreign locale is in the alternate alphabet. Thus, if the user's home locale is Canada, and the user takes the handheld electronic device 4 to, say, Saudi Arabia, these two criteria would be met. That is, the handheld electronic device 4 would currently be disposed in a non-Canadian locale, and the prevalent language in the current locale employs the Arabic alphabet, i.e., the alternate alphabet. If it is assumed that the handheld electronic device 4 has been set up such that the meeting of these two criteria will result in the device automatically switching to the second configuration, and since both preexisting criteria are met, the device would automatically illuminate the Arabic alphabet and make it the active alphabet on the processor apparatus 16.

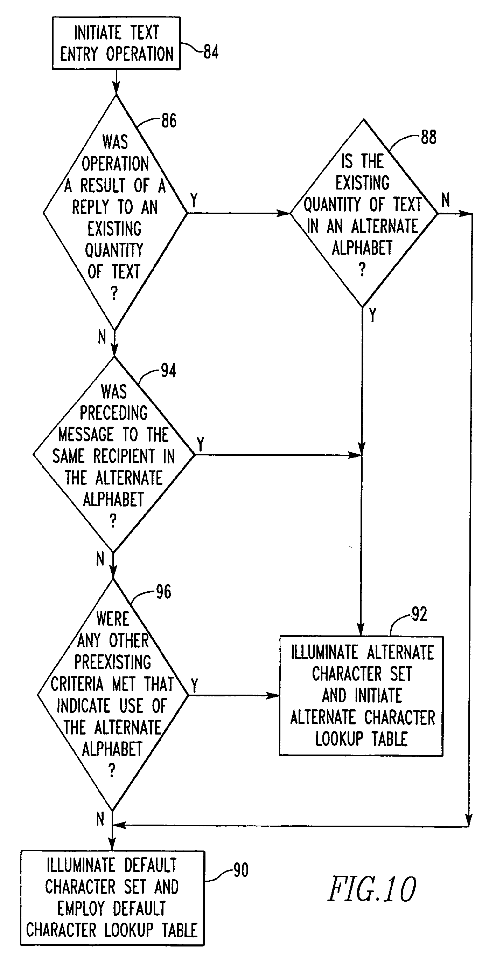

A flowchart demonstrating the advantageous method is depicted generally in Fig. 10. Processing can generally be said to begin, as at 84, where a text entry operation is initiated. It is then determined, as at 86, whether the text entry operation was a result of an action with respect to a preexisting quantity of text, such as a reply to a preexisting email or other message. If the text entry operation was a result of an action with respect to a preexisting quantity of text, processing thereafter continues, as at 88, where it is determined whether the preexisting quantity of text employs an alternate alphabet that is available on the handheld electronic device 4. For instance, the Cyrillic alphabet is not available in the exemplary embodiment depicted herein, and a preexisting message in a Cyrillic language would not be a trigger for, for instance, the use of the Arabic alphabet in replying to such an original message.

As such, if the existing quantity of text is determined, as at 88, to not be available on the handheld electronic device 4 as employing an alternate alphabet, processing continues, as at 90, where the default character set will be illuminated and the default lookup table will be active on the processing apparatus 60. For example, in the exemplary embodiment depicted herein the default character set is the first character set 60, i.e., the set of Latin letters. On the other hand, if it is determined, as at 88, that the preexisting quantity of text employs an alternate alphabet that is available on the handheld electronic device 4, such as the Arabic alphabet in the present example, processing would continue, as at 92, where the alternate character set would be illuminated and the alternate character lookup table, i.e., the Arabic character lookup table, would be made active on the processor apparatus 16.

In the situation where, as at 86, it is determined that the text entry operation was not the result of a reply to a preexisting quantity of text, it is then determined, as at 94, whether a preceding message to the same recipient of the current text entry operation employed an alternate alphabet that is available on the handheld electronic device 4. For example, if the current text entry operation is a new message to a recipient to whom the preceding email communication was typed in the Arabic alphabet, processing would continue, as at 92, where the alternate character set would be illuminated and the alternate character lookup table would be active on the handheld electronic device. Otherwise, processing would continue, as at 96, where it would be determined whether any other preexisting criteria were met that indicated or were triggers for use of the alternate alphabet character set. For instance, the user may have set up rules or other criteria that would trigger the use of the second character set 64 and, if met, would cause the handheld electronic device to go into the second configuration automatically. By way of example, the user may have set the operational rules such that if the handheld electronic device 4 is being operated outside the user's home country, the alphabet of the prevalent language in the current locale of the device is employed if that alphabet is available on the handheld electronic device 4. If such triggering criteria are identified, as at 96, processing continues, as at 92, where the second configuration can be activated. Otherwise, processing continues, as at 90, where the default character set is illuminated and the default character lookup table is made active on the processor apparatus 16.

An exemplary home screen output that can be visually output on the display of any of the handheld electronic device 4 is depicted in Fig. 11 as including a plurality of icons 1062 that are selectable by the user for the purpose of, for example, initiating the execution on the processor apparatus 16 of a routine 44 that is represented by an icon 1062. The track ball is rotatable to provide, for example, navigational inputs among the icons 1062.

Fig. 11 depicts the travel of an indicator 1066 from the icon 1062A, as is indicated in broken lines with the indicator 1066A, to the icon 1062B, as is indicated in broken lines with the indicator 1066B, and onward to the icon 1062C, as is indicated by the indicator 1066C. It is understood that the indicators 1066A, 1066B, and 1066C are not necessarily intended to be simultaneously depicted on the display 18, but rather are intended to together depict a series of situations and to indicate movement of the indicator 1066 among the icons 1062. The particular location of the indicator 1066 at any given time indicates to a user the particular icon 1062, for example, that is the subject of a selection focus of the handheld electronic device 4. Whenever an icon 1062 or other selectable object is the subject of the selection focus, a selection input to the processor apparatus 16 will result in execution or initiation of the routine 44 or other function that is represented by the icon 1062 or other selectable object.

The movement of the indicator 1066 from the icon 1062A, as indicated with the indicator 1066A, to the icon 1062B, as is indicated by the indicator 1066B, was accomplished by rotating the track ball 32 about the vertical axis 34B to provide a horizontal navigational input. As mentioned above, a rotation of the track ball 32 a predetermined rotational distance results in an input to the processor apparatus 16. In the present example, the track ball 32 would have been rotated about the vertical axis 34B a rotational distance equal to three times the predetermined rotational distance since the icon 62B is disposed three icons 1062 to the right the icon 1062A. Such rotation of the track ball 32 likely would have been made in a single motion by the user, but this need not necessarily be the case.

Similarly, the movement of the indicator 1066 from the icon 1062B, as indicated by the indicator 1066B, to the icon 1062C, as is indicated by the indicator 1066C, was accomplished by the user rotating the track ball 32 about the horizontal axis 34A to provide a vertical navigational input. In so doing, the track ball 32 would have been rotated a rotational distance equal to two times the predetermined rotational distance since the icon 1062C is disposed two icons 1062 below the icon 1062B. Such rotation of the track ball 32 likely would have been made in a single motion by the user, but this need not necessarily be the case.

It thus can be seen that the track ball 32 is rotatable in various directions to provide various navigational and other inputs to the processor apparatus 16. Rotational inputs by the track ball 32 typically are interpreted by whichever routine 44 is active on the handheld electronic device 4 as inputs that can be employed by such routine 44. For example, the GUI 44 that is active on the handheld electronic device 4 in Fig. 11 requires vertical and horizontal navigational inputs to move the indicator 1066, and thus the selection focus, among the icons 1062. If a user rotated the track ball 32 about an axis oblique to the horizontal axis 34A and the vertical axis 34B, the GUI 44 likely would resolve such an oblique rotation of the track ball 32 into vertical and horizontal components which could then be interpreted by the GUI 44 as vertical and horizontal navigational movements, respectively. In such a situation, if one of the resolved vertical and horizontal navigational movements is of a greater magnitude than the other, the resolved navigational movement having the greater magnitude would be employed by the GUI 44 as a navigational input in that direction to move the indicator 1066 and the selection focus, and the other resolved navigational movement would be ignored by the GUI 44, for example.

When the indicator 1066 is disposed on the icon 1062C, as is indicated by the indicator 1066C, the selection focus of the handheld electronic device 4 is on the icon 1062C. As such, a translation of the track ball 32 toward the housing 6 as described above would provide an input to the processor apparatus 16 that would be interpreted by the GUI 44 as a selection input with respect to the icon 1062C. In response to such a selection input, the processor apparatus 16 would, for example, begin to execute a routine 44 that is represented by the icon 1062C. It thus can be understood that the track ball 32 is rotatable to provide navigational and other inputs in multiple directions, assuming that the routine 44 that is currently active on the handheld electronic device 4 can employ such navigational or other inputs in a plurality of directions, and can also be translated to provide a selection input or other input.

As mentioned above, Fig. 12 depicts an exemplary menu 1035A that would be appropriate if the user's current logical location within the logical menu tree was viewing an email within an email routine 44. That is, the menu 1035A provides selectable options that would be appropriate for a user given that the user is, for example, viewing an email within an email routine 44. In a similar fashion, Fig. 13 depicts another exemplary menu 1035B that would be depicted if the user's current logical location within the logical menu tree was within a telephone routine 44.

Rotational movement inputs from the track ball 32 could be employed to navigate among, for example, the menus 1035A and 1035B. For instance, after an actuation of the <MENU> key 33 and an outputting by the GUI 44 of a resultant menu, the user could rotate the track ball 32 to provide scrolling inputs to successively highlight the various selectable options within the menu. Once the desired selectable option is highlighted, i.e., is the subject of the selection focus, the user could translate the track ball 32 toward the housing 6 to provide a selection input as to the highlighted selectable option. In this regard, it is noted that the <MENU> key 33 is advantageously disposed adjacent the track ball 32. This enables, for instance, the generation of a menu by an actuation the <MENU> key 33, conveniently followed by a rotation the track ball 32 to highlight a desired selectable option, for instance, followed by a translation of the track ball 32 toward the housing 6 to provide a selection input to initiate the operation represented by the highlighted selectable option.

It is further noted that one of the additional inputs that can be provided by a translation of the track ball 32 is an input that causes the GUI 44 to output a reduced menu. For instance, a translation of the track ball 32 toward the housing 6 could result in the generation and output of a more limited version of a menu than would have been generated if the <MENU> key 33 had instead been actuated. Such a reduced menu would therefore be appropriate to the user's current logical location within the logical menu tree and would provide those selectable options which the user would have a high likelihood of selecting. Rotational movements of the track ball 32 could provide scrolling inputs to scroll among the selectable options within the reduced menu 1035C, and translation movements of the track ball 32 could provide selection inputs to initiate whatever function is represented by the selectable option within the reduce menu 1035C that is currently highlighted.

By way of example, if instead of actuating the <MENU> key 33 to generate the menu 1035A the user translated the track ball 32, the GUI 44 would generate and output on the display the reduced menu 1035C that is depicted generally in Fig. 14. The exemplary reduced menu 1035C provides as selectable options a number of the selectable options from the menu 1035A that the user would be most likely to select. As such, a user seeking to perform a relatively routine function could, instead of actuating the <MENU> key 33 to display the full menu 1035A, translate the track ball 32 to generate and output the reduced menu 1035C. The user could then conveniently rotate the track ball 32 to provide scrolling inputs to highlight a desired selectable option, and could then translate the track ball 32 to provide a selection input which would initiate the function represented by the selectable option in the reduced menu 1035C that is currently highlighted.

In the present exemplary embodiment, many of the menus that could be generated as a result of an actuation of the <MENU> key 33 could instead be generated and output in reduced form as a reduced menu in response to a translation of the track ball 32 toward the housing 6. It is noted, however, that a reduced menu might not be available for each full menu that could be generated from an actuation of the <MENU> key 33. Depending upon the user's specific logical location within the logical menu tree, a translation of the track ball 32 might be interpreted as a selection input rather than an input seeking a reduced menu. For instance, a translation of the track ball 32 on the home screen depicted in Fig. 1 would result in a selection input as to whichever of the icons 1062 is the subject of the input focus. If the <MENU> key 33 was actuated on the home screen, the GUI 44 would output a menu appropriate to the home screen, such as a full menu of all of the functions that are available on the handheld electronic device 4, including those that might not be represented by icons 1062 on the home screen.

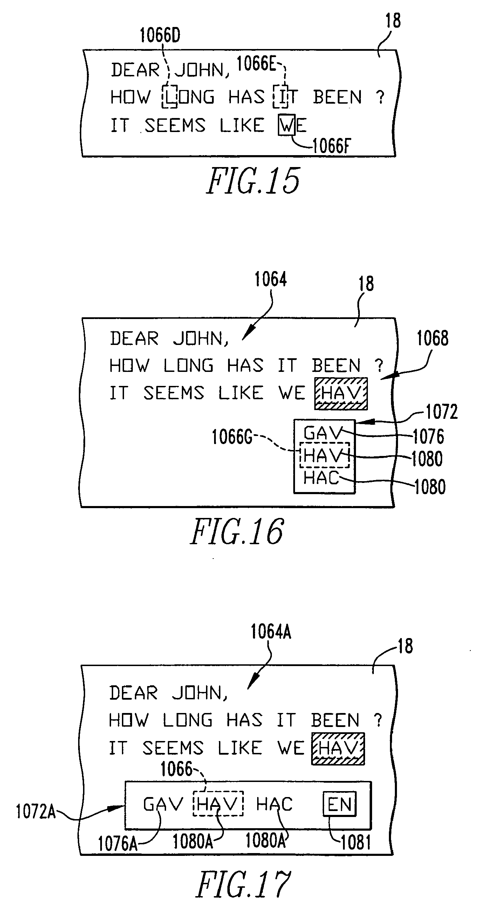

Fig. 15 depicts a quantity of text that is output on the display 18, such as during a text entry operation or during a text editing operation, for example. The indicator 1066 is depicted in Fig. 15 as being initially over the letter "L", as is indicated with the indicator 1066D, and having been moved horizontally to the letter "I", as is indicated by the indicator 1066E, and thereafter vertically moved to the letter "W", as is indicated by the indicator 1066F. In a fashion similar to that in Fig. 11, the cursor 1066 was moved among the letters "L", "I", and "W" through the use of horizontal and vertical navigational inputs resulting from rotations of the track ball 32. In the example of Fig. 15, however, each rotation of the track ball 32 the predetermined rotational distance would move the indicator 1066 to the next adjacent letter. As such, in moving the indicator 1066 between the letters "L" and "I," the user would have rotated the track ball 32 about the vertical axis 1034B a rotational distance equal to nine times the predetermined rotational distance, for example, since "I" is disposed nine letters to the right of "L".

Fig. 16 depicts an output 1064 on the display 18 during, for example, a text entry operation that employs the disambiguation routine 44. The output 1064 can be said to comprise a text component 1068 and a variant component 1072. The variant component 1072 comprises a default portion 1076 and a variant portion 1080. Fig. 16 depicts the indicator 1066G on the variant 1080 "HAV", such as would result from a rotation of the track ball 32 about the horizontal axis 34A to provide a downward vertical scrolling input. In this regard, it is understood that a rotation of the track ball 32 a distance equal to the predetermined rotational distance would have moved the indicator 1066 from a position (not expressly depicted herein) disposed on the default portion 1076 to the position disposed on the first variant 1080, as is depicted in Fig. 16. Since such a rotation of the track ball 32 resulted in the first variant 1080 "HAV" being highlighted with the indicator 1066G, the text component 1068 likewise includes the text "HAV" immediately preceding a cursor 1084A.

Fig. 17 depict an alternative output 1064A having an alternative variant component 1072A having a default portion 1076A and a variant portion 1080A. The variant component 1072A is horizontally arranged, meaning that the default portion 1076A and the variants 1080A are disposed horizontally adjacent one another and can be sequentially selected by the user through the use of horizontal scrolling inputs, such as by the user rotating the track ball 32 the predetermined rotational distance about the vertical axis 34B. This is to be contrasted with the variant component 1072 of Fig. 16 wherein the default portion 1076 and the variants 1080 are vertically arranged, and which can be sequentially selected by the user through the user of vertical scrolling inputs with the track ball 32.

In this regard, it can be understood that the track ball 32 can provide both the vertical scrolling inputs employed in conjunction with the output 1064 as well as the horizontal scrolling inputs employed in conjunction with the output 1064A. For instance, the disambiguation routine 44 potentially could allow the user to customize the operation thereof by electing between the vertically arranged variant component 1072 and the horizontally arranged variant component 1072A. The track ball 32 can provide scrolling inputs in the vertical direction and/or the horizontal direction, as needed, and thus is operable to provide appropriate scrolling inputs regardless of whether the user chooses the variant component 1072 or the variant component 1072A. That is, the track ball 32 can be rotated about the horizontal axis 34A to provide the vertical scrolling inputs employed in conjunction with the variant component 1072, and also can be rotated about the vertical axis 34B to provide the horizontal scrolling inputs that are employed in conjunction with the variant component 1064A. The track ball 32 thus could provide appropriate navigational, strolling, selection, and other inputs depending upon the needs of the routine 44 active at any time on the handheld electronic device 4. The track ball 32 enables such navigational, strolling, selection, and other inputs to be intuitively generated by the user through rotations of the track ball 32 in directions appropriate to the active routine 44, such as might be indicated on the display 18.

It can further be seen from Fig. 17 that the variant component 1072A additionally includes a value 1081 that is indicative of the language into which the disambiguation routine 44 will interpret ambiguous text input. In the example depicted in Fig. 17, the language is English.

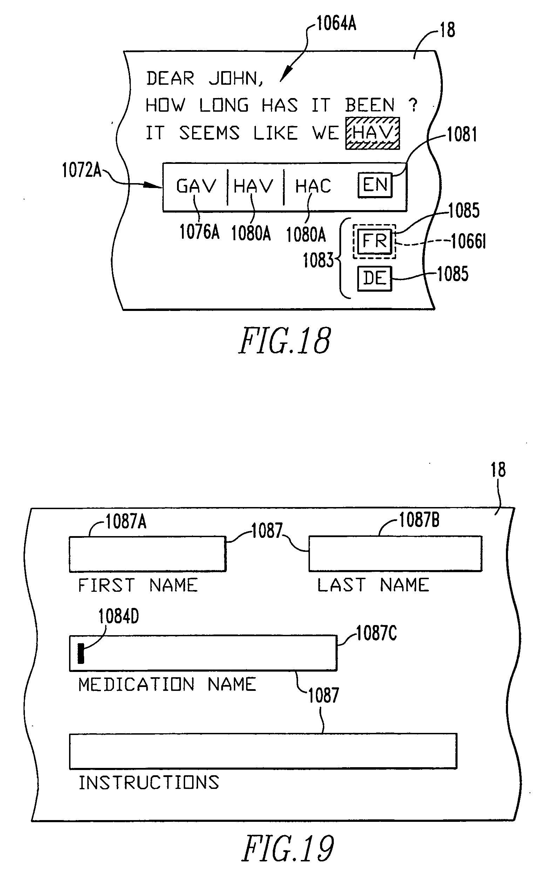

As can be seen in Fig. 18, the value 1081 can be selected by the user to cause the displaying of a list 1083 of alternative values 1085. The alternative values 1085 are indicative of selectable alternative languages into which the disambiguation routine 44 can interpret ambiguous input. A selection of the value 1081 would have been achieved, for example, by the user providing horizontal scrolling inputs with the track ball 32 to cause (not expressly depicted herein) the indicator 1066 to be disposed over the value 1081, and by thereafter translating the track ball 32 toward the housing 6 to provide a selection input.

The alternative values 1085 in the list 1083 are vertically arranged with respect to one another and with respect to the value 1081. As such, a vertical scrolling input with the track ball 32 can result in a vertical movement of the indicator 1066I to a position on one of the alternative values 1085 which, in the present example, is the alternative value 1085 "FR", which is representative of the French language. The alternative value 1085 "FR" could become selected by the user in any of a variety of fashions, such as by actuating the track ball 32 again, by continuing to enter text, or in other fashions. It thus can be understood from Fig. 17 and Fig. 18 that the track ball 32 can be rotated to provide horizontal scrolling inputs and, when appropriate, to additionally provide vertical scrolling inputs and, when appropriate, to additionally provide selection inputs, for example.

Fig. 19 depicts another exemplary output on the display 18 such as might be employed by a data entry routine 44. The exemplary output of Fig. 19 comprises a plurality of input fields 1087 with corresponding descriptions. A cursor 1084D, when disposed within one of the input fields 1087, indicates to the user that an input focus of the handheld electronic device 4 is on that input field 1087. That is, data such as text, numbers, symbols, and the like, will be entered into whichever input field 1087 is active, i.e., is the subject of the input focus. It is understood that the handheld electronic device 4 might perform other operations or take other actions depending upon which input field 1087 is the subject of the input focus.

Navigational inputs from the track ball 32 advantageously enable the cursor 1084D, and thus the input focus, to be switched, i.e., shifted, among the various input fields 1087. For example, the input fields 1087 could include the input fields 1087A, 1087B, and 1087C. Fig. 19 depicts the cursor 1084D as being disposed in the input field 1087C, indicating that the input field 1087C is the subject of the input focus of the handheld electronic device 4. It is understood that the cursor 1084D, and thus the input focus, can be shifted from the input field 1087C to the input field 1087A, which is disposed adjacent and vertically above the input field 1087C, by providing a vertical scrolling input in the upward direction with the track ball 32. That is, the track ball 32 would be rotated the predetermined rotational distance about the horizontal axis 34. Similarly, the cursor 1084D, and thus the input focus, can be shifted from the input field 1087A to the input field 1087B, which is disposed adjacent and to the right of the input field 1087A, by providing a horizontal scrolling input to the right with the track ball 32. That is, such a horizontal scrolling input could be provided by rotating the track ball the predetermined rotational distance about the vertical axis 34B. It thus can be seen that the track ball 32 is rotatable in a plurality of directions about a plurality axes to provide navigational, scrolling, and other inputs in a plurality of directions among a plurality of input fields 1087. Other types of inputs and/or inputs in other applications will be apparent.

While specific embodiments of the disclosed and claimed invention have been described in detail, it will be appreciated by those skilled in the art that various modifications and alternatives to those details could be developed in light of the overall teachings of the disclosure.

## Claims

1. A handheld electronic device (4) comprising:
a processor apparatus (16) comprising a processor (36) and a memory (40);
an input apparatus (8) structured to provide input to the processor apparatus and comprising a keypad apparatus (24);
an output apparatus (12) structured to receive output signals from the processor apparatus;
the keypad apparatus comprising:
a plurality of keys (28), at least some of the keys each comprising an illuminable first indicator which in an illuminated condition is indicative of a first character (52) assigned to the key being active and an illuminable second indicator which in an illuminated condition is indicative of a second character (56) assigned to the key being active;
a first illumination source (76) structured to illuminate at least some of the first indicators; and
a second illumination source (80) structured to illuminate at least some of the second indicators; and
wherein the indicators that are illuminable by the at least one of the first illumination source and the second illumination source are substantially invisible in a non-illuminated condition;
wherein the keypad apparatus further comprises a light pipe (72) structured to transmit electromagnetic energy between the first and second illumination sources and the first and second indicators; and
**characterised in that** : one of the first and second illumination sources is a source of electromagnetic energy outside the visible spectrum and the other of the first illumination source and the second illumination source is a source of electromagnetic energy within the visible spectrum.

2. The handheld electronic device of Claim 1 wherein at most one of the first and second illumination sources is energized at any given time.

## Patentansprüche

1. Handgehaltene elektronische Vorrichtung (4), die aufweist:
eine Prozessorvorrichtung (16), die einen Prozessor (36) und einen Speicher (40) aufweist;
eine Eingabevorrichtung (8), die strukturiert ist zum Liefern einer Eingabe an die Prozessorvorrichtung und eine Tastaturvorrichtung (24) aufweist;
eine Ausgabevorrichtung (12), die strukturiert ist zum Empfangen von Ausgabesignalen von der Prozessorvorrichtung;
wobei die Tastaturvorrichtung aufweist:
eine Vielzahl von Tasten (28), wobei zumindest einige der Tasten jeweils einen beleuchtbaren ersten Indikator aufweisen, der in einem beleuchteten Zustand anzeigt, dass ein erstes Zeichen (52), das der Taste zugewiesen ist, aktiv ist, und einen beleuchtbaren zweiten Indikator, der in einem beleuchteten Zustand anzeigt, dass ein zweites Zeichen (56), das der Taste zugewiesen ist, aktiv ist;
eine erste Beleuchtungsquelle (76), die strukturiert ist, zumindest einige der ersten Indikatoren zu beleuchten; und
eine zweite Beleuchtungsquelle (80), die strukturiert ist, zumindest einige der zweiten Indikatoren zu beleuchten; und
wobei die Indikatoren, die durch die zumindest eine der ersten Beleuchtungsquelle und der zweiten Beleuchtungsquelle beleuchtet werden können, in einem nicht-beleuchteten Zustand im Wesentlichen unsichtbar sind;
wobei die Tastaturvorrichtung weiter eine Lichtröhre (72) aufweist, die strukturiert ist, elektromagnetische Energie zwischen den ersten und zweiten Beleuchtungsquellen und den ersten und zweiten Indikatoren zu übertragen; und
**dadurch gekennzeichnet, dass**:
eine der ersten und zweiten Beleuchtungsquellen eine Quelle von elektromagnetischer Energie außerhalb des sichtbaren Spektrums ist und die andere der ersten Beleuchtungsquelle und der zweiten Beleuchtungsquellen eine Quelle von elektromagnetischer Energie innerhalb des sichtbaren Spektrums ist.

2. Handgehaltene elektronische Vorrichtung gemäß Anspruch 1, wobei höchstens eine der ersten und zweiten Beleuchtungsquellen zu einem gegebenen Zeitpunkt mit Energie versorgt wird.

## Revendications

1. Dispositif électronique portable (4) comprenant :
un appareil de traitement (16) comprenant un processeur (36) et une mémoire (40) ;
un appareil d'entrée (8) structuré pour fournir une entrée à l'appareil de traitement et comprenant un appareil de clavier (24) ;
un appareil de sortie (12) structuré pour recevoir des signaux de sortie provenant de l'appareil de traitement ;
l'appareil de clavier comprenant :
une pluralité de touches (28), au moins certaines des touches comprenant chacune un premier indicateur luminescent qui, à l'état lumineux, indique un premier caractère (52) associé à la touche qui est active et un deuxième indicateur luminescent qui, à l'état lumineux, indique un deuxième caractère (56) associé à la touche qui est active ;
une première source d'éclairage (76) structurée pour éclairer au moins certains des premiers indicateurs ; et
une deuxième source d'éclairage (80) structurée pour éclairer au moins certains des deuxièmes indicateurs ; et
dans lequel les indicateurs qui peuvent être éclairés par au moins l'une de la première source d'éclairage et de la deuxième source d'éclairage sont essentiellement invisibles à l'état non lumineux ;
dans lequel l'appareil de clavier comprend en outre un conduit de lumière (72) structuré pour transmettre de l'énergie électromagnétique entre les première et deuxième sources d'éclairage et les premier et deuxième indicateurs ; et
**caractérisé en ce que** l'une des première et deuxième sources d'éclairage est une source d'énergie électromagnétique à l'extérieur du spectre visible et l'autre source des première et deuxième sources d'éclairage est une source d'énergie électromagnétique dans le spectre visible.

2. Dispositif électronique portable de la revendication 1, dans lequel au plus l'une des première et deuxième sources d'éclairage est excitée à un instant donné.
